# EUROPÄISCHE PATENTSCHRIFT

(11) **EP 3 727 190 B1**
(45) Veröffentlichungstag und Bekanntmachung des Hinweises auf die Patenterteilung: **29.09.2021**
(21) Anmeldenummer: 18830778.9
(22) Anmeldetag: 18.12.2018
(51) Int. Cl.: A61C 17/20, A61C 17/22

(54) **ZAHNÄRZTLICHES HANDSTÜCK MIT EINER PIEZOELEKTRISCHEN ANTRIEBSEINHEIT**
DENTISTRY HANDPIECE HAVING A PIEZOELECTRIC DRIVE UNIT
PIÈCE À MAIN DENTAIRE POURVUE D'UNE UNITÉ D'ENTRAÎNEMENT PIÉZOÉLECTRIQUE

(30) Priorität: 22.12.2017 DE 102017223659
(43) Veröffentlichungstag der Anmeldung: 28.10.2020
(73) Patentinhaber: KaVo Dental GmbH, 88400 Biberach (DE)
(72) Erfinder: KRÜGER, Dennis, 89031 Ulm (DE); MADER, Alfons, 88316 Isny im Allgäu (DE); STEMPFLE, Johann, 89284 Pfaffenhofen (DE)
(74) Vertreter: Thun, Clemens
(86) Internationale Anmeldenummer: PCT/EP2018/085370
(87) Internationale Veröffentlichungsnummer: WO 2019/121600

(56) Entgegenhaltungen:
- WO-A1-2006/083228
- WO-A1-2006/083228
- CN-U- 202 313 793
- CN-U- 202 313 793
- DE-A1- 3 008 215
- DE-A1- 3 008 215
- DE-U1- 20 006 633
- DE-U1-202012 000 970

## Beschreibung

Die Erfindung betrifft ein zahnärztliches Handstück mit einer länglichen Griffhülse sowie einer in der Griffhülse gelagerten piezoelektrischen Antriebseinheit zum Erzeugen von auf ein zahnärztliches Werkzeug zu übertragenden Schwingungen.

Ein entsprechendes zahnärztliches Handstück ist in Form eines so genannten "Piezo-Scalers" bekannt. Bei diesem Handstück werden von der Antriebseinheit erzeugte Schwingungen auf ein, am vorderen Endbereich des Handstücks angeordnetes Werkzeug übertragen, das üblicherweise als Scaler-Tip bezeichnet wird und das zur Entfernung von Ablagerungen auf Zähnen verwendet wird.

Eine entsprechende piezoelektrische Antriebseinheit umfasst typischerweise ein piezoelektrisches Element, auch als "Aktor" bezeichnet, das zwischen einer so genannten Endmasse einerseits und einer so genannten Frontmasse, auch als "Horn" bezeichnet, andererseits angeordnet ist. Das piezoelektrische Element weist dabei in der Regel mehrere ringförmige Piezo-Scheiben auf, die zu einem Stapel zusammengesetzt sind, wobei zwischen den Piezo-Scheiben Elektroden angeordnet sind. Zur elektrischen Stromzufuhr dienen Leitungen, die dementsprechend mit den Elektroden verbunden sind. Wenn die Antriebseinheit wie vorgesehen in dem Handstück eingesetzt ist, ist die Frontmasse dabei vor dem piezoelektrischen Element angeordnet, wobei üblicherweise das Werkzeug zur Verbindung mit der Antriebseinheit auf der Frontmasse aufgeschraubt werden kann.

Die piezoelektrische Antriebseinheit ist typischerweise im Bereich des piezoelektrischen Elements an einer Innenwand der Griffhülse des Handstücks gelagert, wobei die Frontmasse und die Endmasse über ihre jeweiligen Verbindungen zu dem piezoelektrischen Element gehalten angeordnet sind.

In der zahnärztlichen Praxis ist es erforderlich, dass ein derartiges Handstück nach einem Gebrauch wiederaufbereitet wird; hierbei wird es gewaschen und desinfiziert und - üblicherweise in Heißdampf - sterilisiert. Dabei wird das Handstück beispielsweise bei Drücken zwischen 2,3 bar und - 0,9 bar und einer Temperatur von 134 °C behandelt. Hierbei besteht die Gefahr, dass heißer Dampf in den Bereich des piezoelektrischen Elements gelangt; dies ist nachteilig mit Bezug auf die Lebensdauer des piezoelektrischen Elements.

Die WO 2006/083228 A1 zeigt ein zahnärztliches Handstück mit einer länglichen Griffhülse sowie einer in der Griffhülse gelagerten piezoelektrischen Antriebseinheit zum Erzeugen von auf ein zahnärztliches Werkzeug zu übertragende Schwingungen. Ein Gehäuse ist herausnehmbar in der Griffhülse angeordnet, so dass es sterilisiert werden kann. Dabei ist die Antriebseinheit in dem Gehäuse lagert, und zwar mit Hilfe von O-Ringen.

Ferner zeigt die DE 698 12 036 T2 ein zahnärztliches Handgerät mit einem zylinderförmigen Körper und einem Wandler zur Übertragung von Schallwellen auf ein Werkzeug. Der Körper bildet ein Gehäuse, wobei zwischen dem Wandler und dem Gehäuse ein Innenraum gebildet ist, der durch O-Ringe abgedichtet ist.

Die DE 199 16 153 A1 zeigt ein Ultraschallhandstück mit einem Gehäusehauptteil und einem darin angeordneten Paket aus piezoelektrischen Scheiben. Das Scheibenpaket ist von einer elektrischen Isoliermasse, zum Beispiel aus Silikon, umspritzt. Ein Einsatz umgibt eine mit den Scheiben gekoppelte Gegenmasse, wobei der Einsatz und die Isoliermasse in einem angespritzten Funktionsgehäuse zusammengehalten sind.

Der Erfindung liegt die Aufgabe zugrunde, ein entsprechendes verbessertes Handstück anzugeben. Insbesondere soll das Handstück bei breiter Funktionalität verbesserte Eigenschaften mit Bezug auf die Wiederaufbereitungsmöglichkeiten aufweisen. Diese Aufgabe wird gemäß der Erfindung mit dem in dem unabhängigen Anspruch genannten Gegenstand gelöst. Besondere Ausführungsarten der Erfindung sind in den abhängigen Ansprüchen angegeben.

Gemäß der Erfindung ist ein zahnärztliches Handstück mit einer länglichen Griffhülse sowie einer in der Griffhülse gelagerten piezoelektrischen Antriebseinheit zum Erzeugen von auf ein zahnärztliches Werkzeug zu übertragenden Schwingungen vorgesehen. Dabei ist zwischen der piezoelektrischen Antriebseinheit und einem Gehäuse ein fluiddicht gekapselter Innenraum gebildet. Das Handstück weist weiterhin zumindest einen elektrischen Leiter auf, der von einem rückseitigen Ende der Antriebseinheit zu einem vorderen Ende der Antriebseinheit geführt ist, wobei der elektrische Leiter zwischen der Außenseite des Gehäuses und der Innenseite der Griffhülse geführt ist.

Durch den Innenraum lässt sich ein Bereich bilden, der insbesondere bei einer Behandlung des Handstücks mit heißem Wasserdampf vor Letzterem geschützt ist. So lassen sich insbesondere Komponenten der piezoelektrischen Antriebseinheit, die empfindlich gegenüber heißem Wasserdampf sind, geeignet schützen. Dies ist vorteilhaft mit Bezug auf die Lebensdauer der piezoelektrischen Antriebseinheit und damit auch mit Bezug auf die Lebensdauer des Handstücks. Durch das Gehäuse lässt sich dabei die piezoelektrische Antriebseinheit geeignet getrennt von weiteren Komponenten des Handstücks anordnen; hierdurch lässt sich eine breite Funktionalität des Handstücks erzielen. Ferner lässt sich insbesondere Strom, der über einen Versorgungsschlauch an das rückseitige Ende des Handstücks geleitet wird, im Weiteren zum vorderen Ende des Handstücks führen, ohne dass die Abdichtung des Innenraums durch den elektrischen Leiter beeinträchtigt ist. Der Strom kann beispielsweise zur Erzeugung von Licht oder für einen Sensor verwendet werden.

Vorzugsweise ist dabei zur Bildung des fluiddicht gekapselten Innenraums zwischen der Antriebseinheit und dem Gehäuse eine kreisringförmige Dichtstelle gebildet. Eine derartig geformte Dichtstelle ist vergleichsweise einfach geformt und lässt sich daher besonders geeignet herstellen. Insbesondere kann dabei durch die kreisringförmige Dichtstelle eine vordere Begrenzung des Innenraums gebildet sein.

Vorzugsweise weist die Antriebseinheit ein piezoelektrisches Element auf, sowie elektrische Leitungen für eine Stromzufuhr zu dem piezoelektrischen Element, wobei Kontaktstellen zwischen den elektrischen Leitungen und dem piezoelektrischen Element innerhalb des Innenraums gebildet sind. So lassen sich die Kontaktstellen besonders geeignet geschützt anordnen.

Vorzugsweise weist dabei die Antriebseinheit weiterhin ein Einsatzteil auf, wobei eine Abdichtung zwischen den Leitungen und dem Gehäuse mit Hilfe des Einsatzteils gebildet ist. Dies ist insbesondere vorteilhaft, weil so diese Abdichtung des Innenraums an einer Stelle realisiert werden kann, die sich geeignet entfernt von dem piezoelektrischen Element befindet; hierdurch lassen sich die Leitungen an einer Stelle abdichten, die den von der Antriebseinheit erzeugten Schwingungen weniger stark ausgesetzt ist. Besonders vorteilhaft ist es hierbei, wenn dementsprechend das Einsatzteil gegenüber dem piezoelektrischen Element schwingungsentkoppelt angeordnet ist, beispielsweise mit Hilfe eines Elastomer-Lagerteils.

Vorzugsweise ist zur Bildung des fluiddicht gekapselten Innenraums zwischen dem Einsatzteil und dem Gehäuse eine kreisringförmige Dichtung gebildet. So lässt sich insbesondere eine geeignete rückseitige Begrenzung des Innenraums bilden.

Vorzugsweise ist die Antriebseinheit länglich, so dass sie sich entlang einer Längsachse erstreckt, wobei die Antriebseinheit ein Mantelelement aufweist, das mit Bezug auf die Längsachse das piezoelektrische Element ringförmig umgebend angeordnet ist, wobei die kreisringförmige Dichtstelle zwischen dem Mantelelement und dem Gehäuse gebildet ist. Dies ist vorteilhaft, weil die kreisringförmige Dichtstelle so in einem Bereich realisiert werden kann, der vergleichsweise wenig von den Schwingungen beeinflusst ist.

Dabei ist weiterhin vorzugsweise die Gestaltung derart, dass durch die kreisförmige Dichtstelle eine Lagerung des piezoelektrischen Elements gegenüber dem Gehäuse gebildet ist. So lässt sich ein entsprechendes separat gebildetes Lager einsparen.

Vorzugsweise ist der elektrische Leiter in Form eines streifenartigen Flachleiters ausgebildet. Dadurch lässt sich bei gegebenem Querschnitt des Leiters die Griffhülse mit besonders kleinem Querschnitt gestalten.

Herstellungstechnisch vorteilhaft ist der elektrische Leiter als Metallformteil ausgeführt.

Vorzugsweise ist der elektrische Leiter zumindest abschnittsweise als eine auf oder in der Wand des Gehäuses abgeschiedene Leiterbahn ausgeführt; auch dies ist herstellungstechnisch vorteilhaft.

Vorzugsweise ist der elektrische Leiter an seinem rückseitigen Ende mit einem Kontaktstift gekoppelt, wobei der Kontaktstift vorzugsweise einstückiger Bestandteil des elektrischen Leiters ist. Dies ist vorteilhaft mit Bezug auf eine geeignete Verbindungsmöglichkeit des elektrischen Leiters mit einem entsprechenden elektrischen Leiter eines Versorgungsschlauchs, der dafür vorgesehen ist, zur Medienversorgung mit dem rückwärtigen Endbereich des Handstücks verbunden zu werden.

Vorzugsweise ist der elektrische Leiter an seinem vorderen Ende mit einem Kontaktbereich gekoppelt, wobei der Kontaktbereich vorzugsweise einstückiger Bestandteil des elektrischen Leiters ist. Insbesondere kann hierbei der Kontaktbereich als Federkontakt ausgeführt sein. Auf diese Weise lässt sich erzielen, dass am vorderen Endbereich des Handstücks Strom besonders geeignet zur Verfügung gestellt wird.

Vorzugsweise weist das Handstück an seinem vorderen Ende eine Lichtquelle oder einen Sensor auf, wobei der elektrische Leiter der Kontaktierung der Lichtquelle bzw. des Sensors dient. Auf diese Weise lässt sich erzielen, dass sich das Handstück zur Beleuchtung einer Arbeitsstelle bzw. zur Erfassung physikalischer bzw. chemischer Größen eignet; so ist die Funktionalität des Handstücks erweitert. Dabei sind herstellungstechnisch vorteilhaft weiterhin vorzugsweise die Lichtquelle bzw. der Sensor Bestandteil eines Aufsatzes, der lösbar am vorderen Ende der Griffhülse platzierbar ist.

Vorzugsweise sind mehrere streifenartige Flachleiter von dem rückseitigen Ende der Antriebseinheit zu dem vorderen Ende geführt. So lassen sich besonders geeignet mehrere entsprechende Funktionselemente am vorderen Ende des Handstücks realisieren.

Vorzugsweise besteht das Gehäuse aus einem elektrisch isolierenden Material. So lässt sich eine geeignete Isolierung des Leiters bilden, so dass eine entsprechende gesonderte Isolierung nicht erforderlich ist.

Die Erfindung wird im Folgenden anhand eines Ausführungsbeispiels und mit Bezug auf die Zeichnungen näher erläutert. Es zeigen:
- Fig. 1: eine Teilschnitt-Skizze eines anmeldungsgemäßen zahnärztlichen Handstücks,
- Fig. 2: eine Teilschnitt-Skizze von Bestandteilen der piezoelektrischen Antriebseinheit des Handstücks,
- Fig. 3: eine perspektivische Schnitt-Skizze zu der Anordnung der Antriebseinheit in einem Gehäuse und einer Griffhülse des Handstücks,
- Fig. 4: eine Schnittskizze um den rückwärtigen Bereich der Antriebseinheit,
- Fig. 5: eine perspektivische Schnitt-Skizze zu dem Handstück, wobei ein elektrischer Leiter des Handstücks gezeigt ist,
- Fig. 6: eine perspektivische Skizze eines vorderen Aufsatzes des Handstücks und
- Fig. 7: eine Schnitt-Skizze zu dem Handstück nach Art einer Explosionsdarstellung.

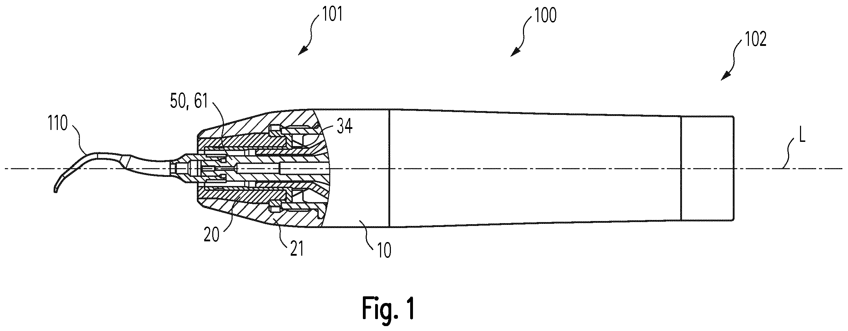

Fig. 1 zeigt eine prinzipielle Teilschnitt-Skizze eines anmeldungsgemäßen zahnärztlichen Handstücks 100. Das Handstück 100 ist insgesamt länglich, so dass es sich entlang einer Längsachse L erstreckt und dementsprechend einen vorderen Endbereich 101 und einen rückwärtigen Endbereich 102 aufweist. Das Handstück 100 weist eine längliche Griffhülse 10 auf, die sich ebenfalls entlang der Längsachse L erstreckt.

Der rückwärtige Endbereich 102 des Handstücks 100 ist insbesondere dazu ausgestaltet, mit einem (in den Figuren nicht gezeigten) Versorgungsschlauch verbunden zu werden, durch den Versorgungsmedien, wie Strom und Wasser zu dem Handstück 100 geleitet werden können, wie dies als solches aus dem Stand der Technik bekannt ist.

In der Griffhülse 10 ist eine piezoelektrische Antriebseinheit 50 gelagert, die dazu ausgestaltet ist, Schwingungen zu erzeugen, die auf ein zahnärztliches Werkzeug 110 übertragen werden können; in Fig. 1 ist als Werkzeug beispielhaft eine so genannte Scaler-Tip skizziert. Die Gestaltung ist dabei vorzugsweise derart, dass das Werkzeug 110 mit der Antriebseinheit 50 am vorderen Endbereich 101 des Handstücks 100 verbunden werden kann, beispielsweise über eine Schraubverbindung.

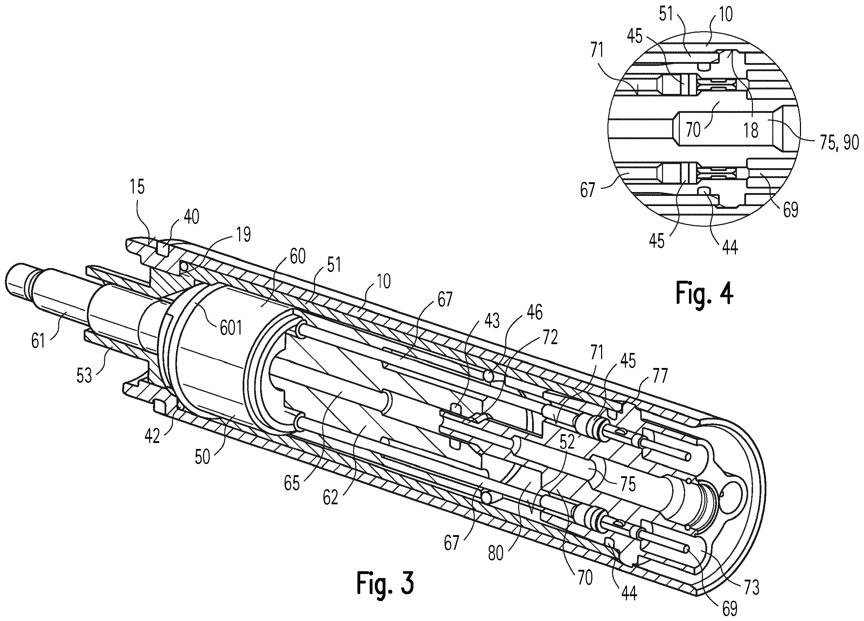

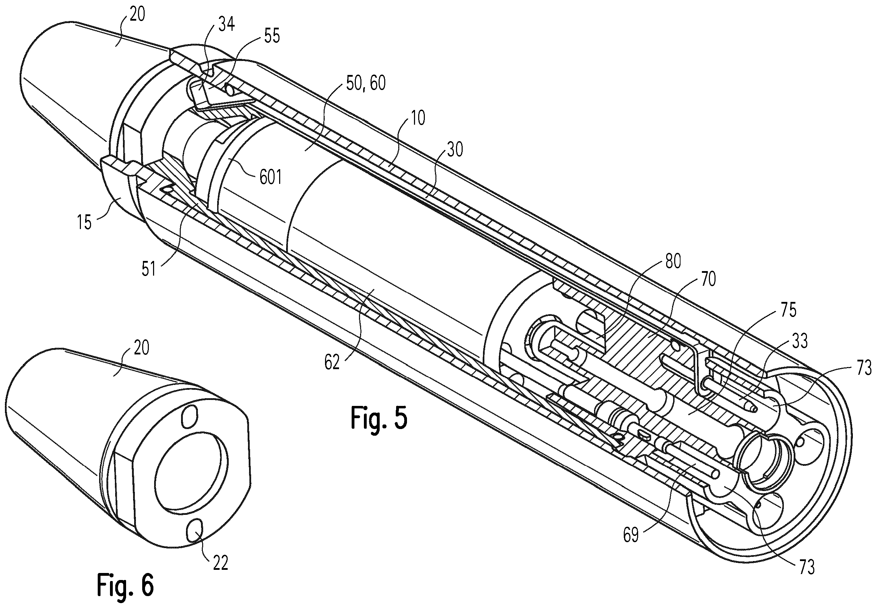

Fig. 5 zeigt eine perspektivische Schnitt-Skizze zu dem Handstücks 100; dabei ist die Griffhülse 10 aufgeschnitten und die darin angeordnete, ebenfalls teilweise aufgeschnitten skizzierte Antriebseinheit 50 erkennbar. Fig. 3 zeigt eine perspektivische Schnitt-Skizze, wobei nicht alle Bestandteile des Handstücks 100 dargestellt sind. Man erkennt hier die etwas weiter aufgeschnittene Griffhülse 10 und die ebenfalls etwas weiter aufgeschnittene Antriebseinheit 50.

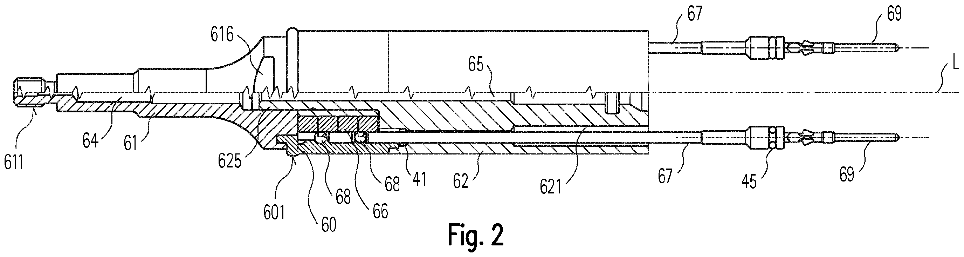

Fig. 2 zeigt eine Teilschnitt-Skizze von Teilen der Antriebseinheit 50 in einem Schnitt entlang der Längsachse L. Die Antriebseinheit 50 ist insbesondere insgesamt länglich, wobei sie sich entlang der Längsachse L erstreckt. Sie weist ein piezoelektrisches Element 66 auf und vorzugsweise eine Frontmasse 61, hier auch als Horn oder Resonanzkörper bezeichnet und eine Endmasse 62.

Das piezoelektrische Element 66 weist beispielsweise piezoelektrische, insbesondere keramische Scheiben auf, zwischen denen Elektroden zur piezoelektrischen Deformation der Scheiben angeordnet sind.

Mit Bezug auf die Längsachse L ist die Frontmasse 61 zumindest überwiegend vor dem piezoelektrischen Element 66 angeordnet, die Endmasse 62 zumindest überwiegend hinter dem piezoelektrischen Element 66.

Die Frontmasse 61 weist vorzugsweise an ihrem vorderen Endbereich ein Gewinde 611 für eine Schraubverbindung mit dem Werkzeug 110 auf.

Weiterhin vorzugsweise weist die Antriebseinheit 50 ein Mantelelement 60 auf, das mit Bezug auf die Längsachse L das piezoelektrische Element 66 ringförmig umgebend angeordnet ist. Das Mantelelement 60 ist vorzugsweise zur Abdichtung und Isolierung des piezoelektrischen Elements 66 ausgestaltet und ist vorzugsweise einerseits dicht mit der mit der Frontmasse 61 verbunden und andererseits dicht mit der Endmasse 62. Beispielsweise kann das Mantelelement 60 durch Umspritzen des piezoelektrischen Elements 66 gebildet sein. Beispielsweise besteht das Mantelelement 60 aus einem Elastomer-Werkstoff oder einem Polymer-Werkstoff.

Weiterhin vorzugsweise weist die Antriebseinheit 50 elektrische Leitungen 67 für eine Stromzufuhr zu dem piezoelektrischen Element 66 auf. Zwischen den elektrischen Leitungen 67 und dem piezoelektrischen Element 66 sind Kontaktstellen 68 gebildet, insbesondere am Übergang zwischen den elektrischen Leitungen 67 und den Elektroden des piezoelektrischen Elements 66.

Im gezeigten Beispiel weist die Endmasse 62 wenigstens eine Bohrung 621 auf, durch die hindurch sich die elektrischen Leitungen 67 erstrecken. Im gezeigten Beispiel sind genau zwei elektrische Leitungen 67 vorgesehen und zwei Bohrungen 621, für jede der Leitungen 67 eine Bohrung 621. Die wenigstens eine Bohrung 621 ist vorzugsweise parallel zu der Längsachse L gebildet.

Weiterhin vorzugsweise weist die Antriebseinheit 50 ein beispielsweise in Fig. 3 skizziertes Einsatzteil 70 auf, das sich insbesondere - mit Bezug auf die Längsachse L - überwiegend hinter der Endmasse 62 erstreckt. Dabei sind die elektrische Leitungen 67 für eine Stromzufuhr zu dem piezoelektrischen Element 66 vorzugsweise durch das Einsatzteil 70 hindurchgeführt. Im gezeigten Beispiel weist das Einsatzteil 70 hierzu genau zwei Durchführungen 71 auf, jeweils eine der Durchführungen 71 für eine der beiden Leitungen 67.

Das piezoelektrische Element 66 ist gegenüber dem Gehäuse 51 schwingungsentkoppelt angeordnet. Dies wird beispielsweise mit Hilfe eines Elastomer-Lagerteils 46 erzielt, das insbesondere zur rückwärtigen Lagerung der Endmasse 62 dient.

Das Handstück 100 weist weiterhin ein Gehäuse 51 auf. Dabei ist zwischen der Antriebseinheit 50 und dem Gehäuse 51 ein fluiddicht gekapselter Innenraum 80 gebildet. Durch die fluiddichte Gestaltung des Innenraums 80 lässt sich erzielen, dass die Antriebseinheit 50, insbesondere das piezoelektrische Element 66 im Fall einer Sterilisation, bei der das Handstück 100 typischerweise bei unterschiedlichen Drücken mit heißem Wasserdampf behandelt wird, geeignet geschützt ist.

Insbesondere ist hierzu die Gestaltung derart, dass die Kontaktstellen 68 zwischen den elektrischen Leitungen 67 und dem piezoelektrischen Element 66 und vorzugsweise das gesamte piezoelektrische Element 66 innerhalb des Innenraums 80 angeordnet sind. Durch den Innenraum 80 lassen sich insbesondere die Kontaktstellen 68 und das piezoelektrische Element 66 vor heißem Wasserdampf geeignet schützen. Dies ist insbesondere vorteilhaft mit Bezug auf die Lebensdauer des piezoelektrischen Elements 66 und damit auf die Lebensdauer der Antriebseinheit 50.

Im gezeigten Beispiel ist das Gehäuse 51 länglich, wobei es sich entlang der Längsachse L erstreckt; es ist in erster Näherung rohrförmig gestaltet, wobei es eine kreiszylindrische Innenwand 52 aufweist, derart, dass die betreffende Zylinderachse der Kreiszylinderform mit der Längsachse L zusammenfällt. Die Innenwand 52 bildet dabei eine äußere Grenzfläche des Innenraums 80. Das Elastomer-Lagerteil 46 ist vorzugsweise die Innenwand 52 kontaktierend angeordnet.

Zur Bildung des fluiddichten Innenraums 80 zwischen der Antriebseinheit 50 und dem Gehäuse 51 ist vorzugsweise eine kreisringförmige Dichtstelle gebildet, insbesondere zwischen dem Mantelelement 60 und dem Gehäuse 51, beispielsweise durch einen radialen Wulst 601 des Mantelelements 60, der dichtend gegen die kreiszylindrische Innenwand 52 des Gehäuses 51 drückend angeordnet ist. Durch die kreisringförmige Gestaltung lässt sich eine besonders geeignete Dichtigkeit erzielen. Insbesondere lässt sich dabei entlang der Dichtlinie eine besonders gleichmäßige Quetschung bzw.

Pressung bewirken; es ist also sozusagen eine Dichtlinie ohne "Unstetigkeiten" gebildet. Im gezeigten Beispiel bildet die kreisringförmige Dichtstelle eine vordere Begrenzung des Innenraums 80.

Vorzugsweise ist bei dieser Gestaltung durch die kreisringförmige Dichtstelle bzw. den Wulst 601 außerdem vorteilhaft eine Lagerung des piezoelektrischen Elements 66 gegenüber dem Gehäuse 51 gebildet.

Weiterhin vorzugsweise ist zur Bildung des fluiddichten Innenraums 80 zwischen dem Einsatzteil 70 und dem Gehäuse 51 eine kreisringförmige Dichtung 44 angeordnet. Die kreisringförmige Dichtung 44 bildet dabei vorzugsweise eine rückseitige bzw. rückwärtige Begrenzung des Innenraums 80. Insbesondere kann die Gestaltung derart sein, dass die kreisringförmige Dichtung 44 gegen die kreiszylindrische Innenwand 52 des Gehäuses 51 drückend angeordnet ist. Hier ist die kreisringförmige Gestaltung wiederum in analoger Weise vorteilhaft.

Im gezeigten Beispiel ist die Gestaltung derart, dass sich die kreiszylindrische Innenwand 52 des Gehäuses 51 - mit Bezug auf die Längsachse L - nach vorne über das piezoelektrische Element 66 hinaus erstreckt und nach hinten über die Endmasse 62 hinaus.

Zur Abdichtung des Innenraums 80 im Bereich der Durchführungen 71 des Einsatzteils 70 für die elektrischen Leitungen 67 ist vorzugsweise wenigstens ein Dichtelement vorgesehen; im gezeigten Beispiel weist das Einsatzteil 70 hierzu zwei O-Ringe 45 auf, wobei jeweils einer der O-Ringe 45 für eine der beiden Leitungen 67 vorgesehen ist. Dies ist auch aus Fig. 4 ersichtlich, die einen Bereich des Einsatzteils 70 im Längsschnitt zeigt.

Zur weitergehenden Abdichtung des Bereichs um das piezoelektrische Element 66 und die dortigen Kontaktstellen 68 kann, wie beispielsweise aus Fig. 2 ersichtlich, eine weitere Dichtung 41 vorgesehen sein, die innerhalb des Innenraums 80 zwischen der Außenfläche einer der beiden Leitungen 67 und der Innenfläche der betreffenden Bohrung 621 wirkend angeordnet ist, insbesondere in Kontakt zu dem Mantelelement 60. Mit Bezug auf die andere der beiden Leitungen 67 gilt Analoges. Die weitere Dichtung 41 kann insbesondere als eine Dichtung zum Mantelelement 60 gestaltet sein.

Im gezeigten Beispiel ist in dem Handstück 100 weiterhin eine Medienleitung 90, insbesondere für Wasser, gebildet, die sich entlang der Längsachse L durch die Antriebseinheit 50 hindurch erstreckt. So wird ermöglicht, dass Wasser durch die Medienleitung 90 hindurch zu dem Werkzeug 110 geleitet wird. Zur Bildung der Medienleitung 90 weist das Einsatzteil 70 eine Durchgangsöffnung 75 auf, die Endmasse 62 eine Durchgangsöffnung 65 auf und die Frontmasse 61 eine Durchgangsöffnung 64 auf. Wie beispielsweise in Fig. 3 gezeigt, ragt das Einsatzteil 70 vorzugsweise mit einem vorderseitigen Zapfen 72, durch den sich die Durchgangsöffnung 75 erstreckt, in den rückwärtigen Bereich der Durchgangsöffnung 65 der Endmasse 62. Hier ist zur weiteren Abdichtung des Innenraums 80 vorzugsweise eine Ringdichtung 43 angeordnet, die dichtend zwischen einer Außenwand des Zapfens 72 des Einsatzteils 70 und einer Innenwand der Durchgangsöffnung 65 der Endmasse 62 wirkt.

Die Endmasse 62 kann, wie beispielsweise in Fig. 2 gezeigt, mit einem vorderseitigen Zapfen 625 in den rückwärtigen Bereich der Durchgangsöffnung 64 der Frontmasse 61 hineinragen. Dabei ist insbesondere zwischen dem Zapfen 625 der Endmasse 62 und der Durchgangsöffnung 64 der Frontmasse 61 eine fluiddichte Verbindung vorgesehen, beispielsweise eine Klebe- und/oder Pressverbindung, so dass der Innenraum 80 auch hier entsprechend dicht gestaltet ist.

Wie beispielsweise aus Fig. 5 hervorgeht, weist das Handstück 100 weiterhin zumindest einen elektrischen Leiter 30 auf, der von einem rückseitigen Ende der Antriebseinheit 50 zu einem vorderen Ende der Antriebseinheit 50 geführt ist, wobei der elektrische Leiter 30 zwischen der Außenseite des Gehäuses 51 und der Innenseite der Griffhülse 10 geführt ist. Dadurch, dass der Leiter 30 zwischen dem Gehäuse 51 und der Griffhülse 10 angeordnet ist, lässt sich insbesondere erzielen, dass die Abdichtung des Innenraums 80 nicht durch den Leiter 30 beeinträchtigt wird. Insbesondere kann die vordere Begrenzung des Innenraums 80 durch den Wulst 601 genau kreisförmig gestaltet sein; dies ist vorteilhaft mit Bezug auf die zu erzielende Dichtigkeit. Dasselbe gilt für die rückseitige Begrenzung des Innenraums 80, die insbesondere durch die kreisringförmige Dichtung 44 gebildet ist.

Im gezeigten Beispiel ist der Leiter 30 in Form eines streifenartigen Flachleiters ausgebildet. So lässt sich erzielen, dass die radiale Erstreckung des Leiters 30 und damit die radiale Erstreckung des Handstücks 10 bei gegebenem Querschnitt des Leiters 30 besonders klein gehalten werden kann. Der Leiter 30 kann beispielsweise als Metallformteil ausgeführt sein.

Das Gehäuse 51 besteht vorzugsweise aus einem elektrisch nichtleitenden Material, insbesondere aus einem Kunststoff-Material. Auch die Griffhülse 10 besteht vorzugsweise aus einem elektrisch nichtleitenden Material, insbesondere aus einem Kunststoff-Material. So lässt sich herstellungstechnisch vorteilhaft erzielen, dass der Leiter 30 sozusagen von außen und von innen elektrisch isoliert ist.

Vorzugsweise erstreckt sich die Griffhülse 10 weiter nach hinten als das Gehäuse 51. Beispielsweise kann die Gestaltung derart sein, dass sich zur Herstellung des Handstücks 100 das Gehäuse 51 insbesondere von hinten in die Griffhülse 10 einschieben lässt.

Vorzugsweise ist zwischen der Griffhülse 10 und dem Gehäuse 51 eine feste Verbindung vorgesehen, die nicht dafür vorgesehen ist, dass sie im normalen zahnärztlichen Betrieb gelöst wird. Die Griffhülse 10 kann beispielsweise durch Umspritzen des Gehäuses 51 gebildet sein, wobei hierbei der Leiter 30 entsprechend mit umspritzt ist. Alternativ kann beispielsweise vorgesehen sein, dass der Leiter 30 in einer Nut eingelegt angeordnet ist, die auf der Außenseite des Gehäuses 51 oder der Innenseite der Griffhülse 10 gebildet ist, wobei dann die Griffhülse 10 und das Gehäuse 51 beispielsweise über eine Klebeverbindung verbunden sein können.

Alternativ oder zusätzlich kann beispielsweise eine Ringschnappverbindung zwischen dem Gehäuse 51 und der Griffhülse 10 vorgesehen sein; wie in den Figuren 3 und 4 angedeutet, kann hierzu beispielsweise an dem Einsatzteil 70 eine Außenwulst 77 angeformt sein, die hinter der rückwärtigen Begrenzung des Gehäuses 51 radial nach außen in eine korrespondierende Ringnut 18 eingreift, die auf der Innenseite der Griffhülse 10 gebildet ist.

Durch diese Gestaltung bildet die Außenwulst 77 auch eine Lagesicherung der Antriebseinheit 50 gegen ein Verschieben nach vorne oder hinten, also eine axiale Lagesicherung.

Zur axialen Lagesicherung des Gehäuses 51 nach vorne weist die Griffhülse 10 vorzugsweise eine radial nach innen weisende Schulterfläche 19 auf, die insbesondere vor dem radialen Wulst 601 des Mantelelements 60 ausgebildet ist. So lässt sich durch die Schulterfläche 19 und die die Außenwulst 77 eine axiale Lagesicherung des Gehäuses 51 bilden.

Alternativ zu der Gestaltung als streifenartiger Flachleiter kann der Leiter 30 beispielsweise zumindest abschnittsweise als eine auf oder in der Wand des Gehäuses 51 abgeschiedene Leiterbahn ausgeführt sein. Beispielsweise kann der Leiter 30 mit einem MID-Verfahren (MID: Moulded Interconnect Devices) gebildet sein. Folgende Verfahren sind hierbei beispielsweise geeignet möglich: Zweikomponentenspritzguss, Heißprägeverfahren, MID-LDS (Laser-Direkt-Strukturierung), Folienhinterspritzung. Durch MID-LDS kann der Leiter 30 auf dem Gehäuse 51 direkt strukturiert werden. Beim Zweikomponentenspritzguss lässt sich mit einem metallisierbaren Kunststoff eine elektrisch leitfähige Struktur erzeugen, die dann umspritzt wird. In diesem Fall ist dann eine gesonderte Griffhülse entbehrlich bzw. ist die Griffhülse 10 durch die Umspritzung des Gehäuses 51 gebildet.

Wie aus Fig. 5 ersichtlich, ragt der Leiter 30 vorzugsweise mit seinem rückseitigen Endbereich aus dem Gehäuse 51 insbesondere radial einwärts heraus, so dass hier eine elektrische Kontaktierung, beispielsweise mit einem entsprechenden Leiter des Versorgungsschlauchs vorgesehen sein kann. Beispielsweise ist der elektrische Leiter 30 an seinem rückseitigen Ende mit einem Kontaktstift 33 gekoppelt bzw. bildet der Leiter 30 an seinem rückseitigen Ende einen Kontaktstift 33. Der Kontaktstift 33 kann also vorzugsweise ein einstückiger Bestandteil des elektrischen Leiters 30 sein. Vorteilhaft kann dabei um den Kontaktstift 33 herum durch das Einsatzteil 70 eine Art Dom 73 gebildet sein, durch den ein Schutz des Kontaktstifts 33 gebildet ist.

Ein entsprechender Dom 73 kann auch um einen weiteren Kontaktstift 69 gebildet sein, der am rückwärtigen Ende einer der elektrischen Leitungen 67 für eine Stromzufuhr zu dem piezoelektrischen Element 66 ausgebildet ist. Wiederum kann für die entsprechend andere der Leitungen 67 eine analoge Gestaltung vorgesehen sein.

Vorzugsweise ist der elektrische Leiter 30 an seinem vorderen Ende mit einem Kontaktbereich 34 gekoppelt bzw. bildet an seinem vorderen Ende einen Kontaktbereich 34; vorzugsweise bildet also der Kontaktbereich 34 einen einstückigen Bestandteil des elektrischen Leiters 30. Besonders vorteilhaft kann der Kontaktbereich 34 als Federkontakt ausgeführt sein. Dementsprechend ragt der Leiter 30 vorzugsweise auch an seinem vorderen Ende aus dem Gehäuse 51 heraus, insbesondere radial einwärts.

Vorzugsweise weist das Handstück 100 an seinem vorderen Ende 101 eine Lichtquelle, insbesondere in Form einer LED-Baugruppe oder einen Sensor auf, wobei der elektrische Leiter 30 der Kontaktierung der Lichtquelle bzw. des Sensors dient. Dabei sind die Lichtquelle bzw. der Sensor vorzugweise Bestandteil eines Aufsatzes 20, der lösbar am vorderen Ende der Griffhülse 10 platzierbar ist, beispielsweise über eine Schraubverbindung.

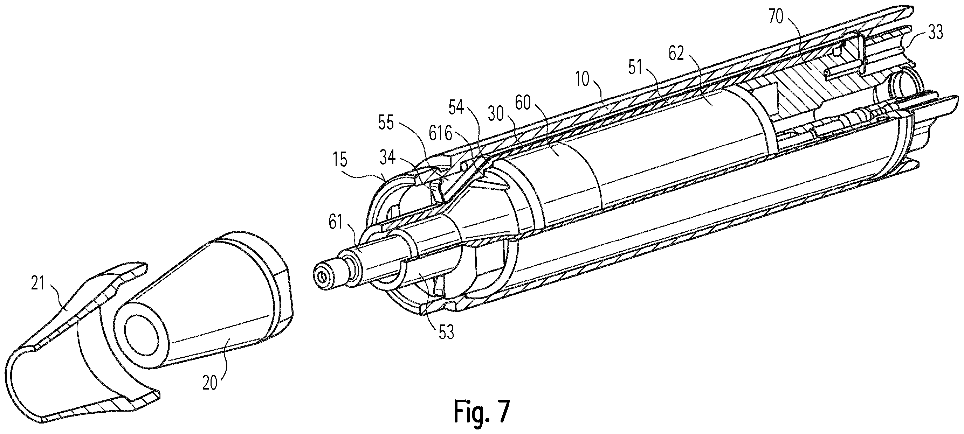

Im gezeigten Beispiel ist zum Halten des Aufsatzes ein, in Fig. 7 skizziertes Mutter-Element 21 vorgesehen, das auf ein Außengewinde 15 aufgeschraubt werden kann, das am vorderen Endbereich der Griffhülse 10 ausgebildet ist. Zur Abdichtung, insbesondere gegen Verschmutzungen im Betriebsfall ist vorzugsweise eine Dichtung 40 zwischen dem Mutter-Element 21 und der Griffhülse 10 vorgesehen.

In Fig. 6 ist der Aufsatz 20 separiert bei Ansicht von schräg hinten perspektivisch skizziert. An seinem rückwärtigen Endbereich kann der Aufsatz 20 wenigstens eine Kontaktfläche 22 aufweisen, die zur Kontaktierung mit dem vorderen Endbereich des Leiters 30, insbesondere mit dem Federkontakt 34 ausgestaltet ist.

Im gezeigten Beispiel weist das Gehäuse 51 an seinem vorderen Endbereich einen rohrzylinderartigen Fortsatz 53 auf, durch den eine Isolationsstrecke zum Schutz vor einer ungewollten Spannungsübertragung zwischen dem piezoelektrischen Element 66 einerseits und der LED-Baugruppe bzw. dem Sensor andererseits gebildet ist.

Dabei weist das Gehäuse 51 weiterhin vorzugsweise zwischen dem Längsbereich, über den sich die kreiszylindrische Innenwand 52 erstreckt und dem Fortsatz 53 einen sich verjüngenden Bereich 54 auf, in dem sich die Außenfläche des Gehäuses 51 nach vorne zu verjüngt. An diesem Bereich 54 des Gehäuses 51 kann insbesondere eine Ausnehmung 55 für den Kontaktbereich 34 gebildet sein, in der der Kontaktbereich 34 vor Beschädigung gut geschützt angeordnet ist. Durch die Ausnehmung kann auch ein Auflagebereich für den Kontaktbereich 34 gebildet sein.

Auf seiner radial nach innen weisenden Seite weist der sich verjüngende Bereich 54 vorzugsweise eine Strukturierung auf, die mit einer Schlüsselfläche 616 der Frontmasse 61 wechselwirkt, so dass hierdurch eine Sicherung gegen ein Verdrehen der Frontmasse 61 und damit auch des piezoelektrischen Elements 66 um die Längsachse L relativ zu dem Gehäuse 51 gebildet ist.

Im gezeigten Beispiel ist weist das Handstück 100 ein - in Fig. 3 bezeichnetes - Elastomer-Lagerelement 42 auf, das zwischen der nach innen weisenden Schulterfläche 19 der Griffhülse 10 und dem sich verjüngenden Bereich 54 des Gehäuses 51 wirkend angeordnet ist und das zur Schwingungsentkopplung dient; es kann auch zur Halterung des Kontaktbereichs 34 beitragen.

Vorzugsweise sind mehrere analog zu dem Leiter 30 gestaltete Leiter vorgesehen, insbesondere mehrere streifenartige Flachleiter 30, die von dem rückseitigen Ende der Antriebseinheit 50 zu dem vorderen Ende geführt sind. Beispielsweise können zwei derartige Leiter zur Stromversorgung der Lichtquelle bzw. der LED-Baugruppe vorgesehen sein.

Bei der oben beschriebenen Gestaltung ist also der Leiter 30 zwischen dem Gehäuse 51 und der Griffhülse 10 angeordnet, wodurch die Abdichtung des Innenraums 80 vorteilhaft ermöglicht ist. Falls der Leiter eine besonders geringe Stärke aufweist, beispielsweise kleiner als 0,15 mm, kann der Leiter auch an der Innenseite des Gehäuses angeordnet werden, ohne die Dichtungen des Innenraums signifikant zu beeinträchtigen. Bevorzugt ist jedoch die oben beschriebene Ausführung.

### Bezugszeichenliste

- L: Längsachse

- 10: Griffhülse
- 15: Außengewinde der Griffhülse
- 18: Nut in der Griffhülse
- 19: Schulterfläche der Griffhülse zur vorderseitigen Anlage des Gehäuses

- 100: Handstück
- 101: vorderer Endbereich
- 102: rückwärtiger Endbereich
- 110: Werkzeug

- 20: Aufsatz
- 21: Mutter-Element
- 22: Kontaktfläche des Aufsatzes

- 30: elektrischer Leiter
- 33: Kontaktstift
- 34: vorderer Kontaktbereich des Leiters, Federkontakt

- 40: Dichtung zwischen Griffhülse und Aufsatz
- 41: Dichtung zwischen elektrischer Leitung und Bohrung in der Endmasse
- 42: Elastomer-Lagerelement
- 43: Ringdichtung zwischen Zapfen des Einsatzteils und Durchgangsöffnung der Endmasse
- 44: kreisringförmige Dichtung zwischen Einsatzteil und Gehäuse
- 45: O-Ringe
- 46: Elastomer-Lagerteil zur Schwingungsentkopplung zwischen Endmasse und Einsatzteil

- 50: piezoelektrische Antriebseinheit
- 51: Gehäuse
- 52: kreiszylindrische Innenwand
- 53: rohrzylinderartiger Fortsatz des Gehäuses
- 54: sich verjüngender Bereich des Gehäuses
- 55: Ausnehmung des Gehäuses

- 60: Mantelelement
- 61: Frontmasse
- 62: Endmasse
- 64: Durchgangsöffnung der Frontmasse zur Medienkanalbildung
- 65: Durchgangsöffnung der Endmasse zur Medienkanalbildung
- 66: piezoelektrisches Element
- 67: elektrische Leitungen für eine Stromzufuhr zu dem piezoelektrischen Element
- 68: Kontaktstellen zwischen elektrischen Leitungen und Piezoelement
- 69: Kontaktstifte am rückwärtigen Ende der elektrischen Leitungen
- 601: radialer Wulst
- 611: Gewinde am vorderen Zapfen der Frontmasse
- 621: Bohrungen für elektrische Leitungen
- 616: Schlüsselfläche der Frontmasse
- 625: vorderseitiger Zapfen der Endmasse

- 70: Einsatzteil
- 71: Durchführungen für elektrische Leitungen
- 72: vorderseitiger Zapfen des Einsatzteils
- 73: Dome zum Schutz von Kontaktstiften
- 75: Durchgangsöffnung des Einsatzteils zur Medienkanalbildung
- 77: Außenwulst des Einsatzteils

- 80: Innenraum, fluiddicht gekapselt

- 90: Medienleitung

## Patentansprüche

1. Zahnärztliches Handstück (100) mit einer länglichen Griffhülse (10) sowie einer in der Griffhülse (10) gelagerten piezoelektrischen Antriebseinheit (50) zum Erzeugen von auf ein zahnärztliches Werkzeug (110) zu übertragenden Schwingungen,
wobei zwischen der piezoelektrischen Antriebseinheit (50) und einem Gehäuse (51) ein fluiddicht gekapselter Innenraum (80) gebildet ist,
**dadurch gekennzeichnet,**
**dass** zumindest ein elektrischer Leiter (30) von einem rückseitigen Ende der Antriebseinheit (50) zu einem vorderen Ende der Antriebseinheit (50) geführt ist, wobei der elektrische Leiter (30) zwischen der Außenseite des Gehäuses (51) und der Innenseite der Griffhülse (10) geführt ist.

2. Zahnärztliches Handstück nach Anspruch 1,
**dadurch gekennzeichnet,**
**dass** zur Bildung des fluiddicht gekapselten Innenraums (80) zwischen der Antriebseinheit (50) und dem Gehäuse (51) eine kreisringförmige Dichtstelle gebildet ist, wobei durch die kreisringförmige Dichtstelle insbesondere eine vordere Begrenzung des Innenraums (80) gebildet ist.

3. Zahnärztliches Handstück nach Anspruch 1 oder 2,
**dadurch gekennzeichnet,**
**dass** die Antriebseinheit (50) ein piezoelektrisches Element (66) aufweist, sowie elektrische Leitungen (67) für eine Stromzufuhr zu dem piezoelektrischen Element (66), wobei Kontaktstellen (68) zwischen den elektrischen Leitungen (67) und dem piezoelektrischen Element (66) innerhalb des Innenraums (80) gebildet sind.

4. Zahnärztliches Handstück nach Anspruch 3,
**dadurch gekennzeichnet,**
**dass** die Antriebseinheit (50) weiterhin ein Einsatzteil (70) aufweist, wobei eine Abdichtung zwischen den Leitungen (67) und dem Gehäuse (51) mit Hilfe des Einsatzteils (70) gebildet ist.

5. Zahnärztliches Handstück nach Anspruch 4,
**dadurch gekennzeichnet,**
**dass** zur Bildung des fluiddicht gekapselten Innenraums (80) zwischen dem Einsatzteil (70) und dem Gehäuse (51) eine kreisringförmige Dichtung (44) gebildet ist, wobei durch die kreisringförmige Dichtung (44) insbesondere eine rückwärtige Begrenzung des Innenraums (80) gebildet ist.

6. Zahnärztliches Handstück nach einem der Ansprüche 3 bis 5,
**dadurch gekennzeichnet,**
**dass** das piezoelektrische Element (66) gegenüber dem Gehäuse (51) schwingungsentkoppelt angeordnet ist, vorzugsweise mit Hilfe eines Elastomer-Lageteils (46).

7. Zahnärztliches Handstück nach einem der vorhergehenden Ansprüche mit den im Anspruch 2 genannten Merkmalen,
**dadurch gekennzeichnet,**
**dass** die Antriebseinheit (50) länglich ist, so dass sie sich entlang einer Längsachse (L) erstreckt, wobei die Antriebseinheit (50) ein Mantelelement (60) aufweist, das mit Bezug auf die Längsachse (L) das piezoelektrische Element (66) ringförmig umgebend angeordnet ist, wobei die kreisringförmige Dichtstelle zwischen dem Mantelelement (60) und dem Gehäuse (51) gebildet ist.

8. Zahnärztliches Handstück nach Anspruch 7,
**dadurch gekennzeichnet,**
**dass** die Gestaltung derart ist, dass durch die kreisförmige Dichtstelle eine Lagerung des piezoelektrischen Elements (66) gegenüber dem Gehäuse (51) gebildet ist.

9. Zahnärztliches Handstück nach einem der vorherigen Ansprüche,
**dadurch gekennzeichnet,**
**dass** der elektrische Leiter (30) in Form eines streifenartigen Flachleiters ausgebildet ist, wobei vorzugsweise der elektrische Leiter (30) als Metallformteil ausgeführt ist.

10. Zahnärztliches Handstück nach Anspruch 9,
**dadurch gekennzeichnet,**
**dass** der elektrische Leiter (30) zumindest abschnittsweise als eine auf oder in der Wand des Gehäuses (51) abgeschiedene Leiterbahn ausgeführt ist.

11. Zahnärztliches Handstück nach einem der Ansprüche 8 bis 10,
**dadurch gekennzeichnet,**
**dass** der elektrische Leiter (30) an seinem rückseitigen Ende mit einem Kontaktstift (33) gekoppelt ist, wobei der Kontaktstift (33) vorzugsweise einstückiger Bestandteil des elektrischen Leiters (30) ist.

12. Zahnärztliches Handstück nach einem der Ansprüche 8 bis 11,
**dadurch gekennzeichnet,**
**dass** der elektrische Leiter (30) an seinem vorderen Ende mit einem Kontaktbereich (34) gekoppelt ist, wobei der Kontaktbereich (34) vorzugsweise einstückiger Bestandteil des elektrischen Leiters (30) ist,
und wobei besonders bevorzugt der Kontaktbereich (34) als Federkontakt ausgeführt ist.

13. Zahnärztliches Handstück nach einem der Ansprüche 8 bis 12,
**dadurch gekennzeichnet,**
**dass** dieses an seinem vorderen Ende eine Lichtquelle oder einen Sensor aufweist, wobei der elektrische Leiter (30) der Kontaktierung der Lichtquelle bzw. des Sensors dient.

14. Zahnärztliches Handstück nach Anspruch 13,
**dadurch gekennzeichnet,**
**dass** die Lichtquelle bzw. der Sensor Bestandteil eines Aufsatzes (20) sind, der lösbar am vorderen Ende der Griffhülse (10) platzierbar ist.

15. Zahnärztliches Handstück nach einem der Ansprüche 8 bis 14,
**dadurch gekennzeichnet,**
**dass** mehrere streifenartige Flachleiter (30) von dem rückseitigen Ende der Antriebseinheit (50) zu dem vorderen Ende geführt sind.

## Claims

1. Dental handpiece (100) comprising an elongate grip sleeve (10) and a piezoelectric drive unit (50) mounted in the grip sleeve (10) for the purpose of generating vibrations that are to be transmitted to a dental tool (110), wherein an interior (80) encapsulated in a fluid-tight manner is formed between the piezoelectric drive unit (50) and a housing (51), **characterized in that** at least one electrical conductor (30) is routed from a rear end of the drive unit (50) to a front end of the drive unit (50), wherein the electrical conductor (30) is routed between the outer side of the housing (51) and the inner side of the grip sleeve (10).

2. Dental handpiece according to Claim 1, **characterized in that** in order to form the interior (80), encapsulated in a fluid-tight manner, between the drive unit (50) and the housing (51), an annular sealing point is formed, wherein in particular a front boundary of the interior (80) is formed by the annular sealing point.

3. Dental handpiece according to Claim 1 or 2, **characterized in that** the drive unit (50) has a piezoelectric element (66), and also electrical lines (67) for supplying current to the piezoelectric element (66), wherein contact points (68) between the electrical lines (67) and the piezoelectric element (66) are formed within the interior (80).

4. Dental handpiece according to Claim 3, **characterized in that** the drive unit (50) furthermore has an insert part (70), wherein a seal between the lines (67) and the housing (51) is formed with the aid of the insert part (70) .

5. Dental handpiece according to Claim 4, **characterized in that** an annular seal (44) is formed in order to form the interior (80), encapsulated in a fluid-tight manner, between the insert part (70) and the housing (51), wherein in particular a rear boundary of the interior (80) is formed by the annular seal (44).

6. Dental handpiece according to one of Claims 3 to 5, **characterized in that** the piezoelectric element (66) is arranged in a vibration-decoupled fashion in relation to the housing (51), preferably with the aid of an elastomeric bearing part (46).

7. Dental handpiece according to one of the preceding claims with the features mentioned in Claim 2, **characterized in that** the drive unit (50) is elongate, such that it extends along a longitudinal axis (L), wherein the drive unit (50) has a jacket element (60) which, with respect to the longitudinal axis (L), is arranged so as to annularly surround the piezoelectric element (66), wherein the annular sealing point is formed between the jacket element (60) and the housing (51).

8. Dental handpiece according to Claim 7, **characterized in that** the design is such that a bearing for the piezoelectric element (66) relative to the housing (51) is formed by the annular sealing point.

9. Dental handpiece according to one of the preceding claims, **characterized in that** the electrical conductor (30) is designed in the form of a strip-like flat conductor, wherein preferably the electrical conductor (30) is configured as a metal moulding.

10. Dental handpiece according to Claim 9, **characterized in that** the electrical conductor (30) is configured at least in part as a conductor track deposited on or in the wall of the housing (51).

11. Dental handpiece according to one of Claims 8 to 10, **characterized in that** the electrical conductor (30) is coupled at its rear end to a contact pin (33), wherein the contact pin (33) is preferably an integral part of the electrical conductor (30).

12. Dental handpiece according to one of Claims 8 to 11, **characterized in that** the electrical conductor (30) is coupled at its front end to a contact region (34), wherein the contact region (34) is preferably an integral part of the electrical conductor (30), and wherein the contact region (34) is particularly preferably configured as a spring contact.

13. Dental handpiece according to one of Claims 8 to 12, **characterized in that** it has a light source or a sensor at its front end, wherein the electrical conductor (30) serves for the contacting of the light source or the sensor.

14. Dental handpiece according to Claim 13, **characterized in that** the light source or the sensor is part of an attachment (20) which can be placed detachably at the front end of the grip sleeve (10).

15. Dental handpiece according to one of Claims 8 to 14, **characterized in that** a plurality of strip-like flat conductors (30) are routed from the rear end of the drive unit (50) to the front end.

## Revendications

1. Pièce à main dentaire (100) avec un manchon de poignée (10) allongé ainsi qu'une unité d'entraînement (50) piézoélectrique montée dans le manchon de poignée (10) pour produire des oscillations à transférer à un outil dentaire (110), un espace intérieur (80) encapsulé de manière étanche au fluide étant formé entre l'unité d'entraînement (50) piézoélectrique et un boîtier (51),
**caractérisée en ce**
**qu'**au moins un conducteur électrique (30) est guidé à partir d'une extrémité arrière de l'unité d'entraînement (50) vers une extrémité avant de l'unité d'entraînement (50),
le conducteur électrique (30) étant guidé entre la face extérieure du boîtier (51) et la face intérieure du manchon de poignée (10).

2. Pièce à main dentaire selon la revendication 1,
**caractérisée en ce**
**que** pour la formation de l'espace intérieur (80) encapsulé de manière étanche au fluide entre l'unité d'entraînement (50) et le boîtier (51), un point d'étanchéité en forme d'anneau circulaire est formé, dans laquelle en particulier une délimitation avant de l'espace intérieur (80) est formée par le point d'étanchéité en forme d'anneau circulaire.

3. Pièce à main dentaire selon la revendication 1 ou 2,
**caractérisée en ce**
**que** l'unité d'entraînement (50) présente un élément piézoélectrique (66), ainsi que des lignes électriques (67) pour une amenée de courant à l'élément piézoélectrique (66), des points de contact (68) étant formés entre les lignes électriques (67) et l'élément piézoélectrique (66) à l'intérieur de l'espace intérieur (80).

4. Pièce à main dentaire selon la revendication 3,
**caractérisée en ce**
**que** l'unité d'entraînement (50) présente en outre une pièce d'insertion (70), une étanchéité entre les lignes (67) et le boîtier (51) étant formée à l'aide de la pièce d'insertion (70).

5. Pièce à main dentaire selon la revendication 4,
**caractérisée en ce**
**que** pour la formation de l'espace intérieur (80) encapsulé de manière étanche au fluide entre la pièce d'insertion (70) et le boîtier (51) un joint en forme d'anneau circulaire (44) est formé, en particulier une délimitation arrière de l'espace intérieur (80) formée par le joint en forme d'anneau circulaire (44).

6. Pièce à main dentaire selon l'une quelconque des revendications 3 à 5,
**caractérisée en ce**
**que** l'élément piézoélectrique (66) est disposé de manière découplée des oscillations par rapport au boîtier (51), de préférence à l'aide d'une pièce de support élastomère (46).

7. Pièce à main dentaire selon l'une quelconque des revendications précédentes avec les caractéristiques citées dans la revendication 2,
**caractérisée en ce**
**que** l'unité d'entraînement (50) est allongée, de sorte qu'elle s'étend le long d'un axe longitudinal (L), dans laquelle l'unité d'entraînement (50) présente un élément d'enveloppe (60), qui est disposé de manière à entourer l'élément piézoélectrique (66) annulairement par rapport à l'axe longitudinal (L), dans laquelle le point d'étanchéité en forme d'anneau circulaire est formé entre l'élément d'enveloppe (60) et le boîtier (51).

8. Pièce à main dentaire selon la revendication 7,
**caractérisée en ce**
**que** la configuration est telle qu'un montage de l'élément piézoélectrique (66) par rapport au boîtier (51) est formé par le point d'étanchéité circulaire.

9. Pièce à main dentaire selon l'une quelconque des revendications précédentes,
**caractérisée en ce**
**que** le conducteur électrique (30) est réalisé sous forme d'un conducteur plat de type bande, dans laquelle de préférence le conducteur électrique (30) est réalisé en tant que pièce moulée métallique.

10. Pièce à main dentaire selon la revendication 9,
**caractérisée en ce**
**que** le conducteur électrique (30) est réalisé au moins sur certaines parties en tant que tracé conducteur déposé sur ou dans la paroi du boîtier (51).

11. Pièce à main dentaire selon l'une quelconque des revendications 8 à 10,
**caractérisée en ce**
**que** le conducteur électrique (30) est couplé au niveau de son extrémité arrière à une broche de contact (33), dans laquelle la broche de contact (33) fait de préférence partie intégrante du conducteur électrique (30).

12. Pièce à main dentaire selon l'une quelconque des revendications 8 à 11,
**caractérisée en ce**
**que** le conducteur électrique (30) est couplé au niveau de son extrémité avant à une zone de contact (34), dans laquelle la zone de contact (34) fait de préférence partie intégrante du conducteur électrique (30),
et dans laquelle de manière particulièrement préférée la zone de contact (34) est réalisée en tant que contact élastique.

13. Pièce à main dentaire selon l'une quelconque des revendications 8 à 12,
**caractérisée en ce**
**que** celle-ci présente au niveau de son extrémité avant une source de lumière ou un capteur, dans laquelle le conducteur électrique (30) sert à la mise en contact de la source de lumière ou du capteur.

14. Pièce à main dentaire selon la revendication 13,
**caractérisée en ce**
**que** la source de lumière ou le capteur fait partie intégrante d'un chapeau (20), qui peut être placé de manière détachable au niveau de l'extrémité avant du manchon de poignée (10).

15. Pièce à main dentaire selon l'une quelconque des revendications 8 à 14,
**caractérisée en ce**
**que** plusieurs conducteurs plats (30) de type bande sont guidés à partir de l'extrémité arrière de l'unité d'entraînement (50) vers l'extrémité avant.
